# EUROPEAN PATENT APPLICATION

(11) **EP 4 852 249 A1**
(43) Date of publication of application: **09.12.2026**
(21) Application number: 26164592.3
(22) Date of filing: 13.03.2026
(51) Int. Cl.: H02G 3/20, F21V 21/03, H02G 15/117

(54) **A SECURING FIXTURE**

(30) Priority: 02.06.2025 GB 202508618; 07.10.2025 GB 202516702
(71) Applicant: Thorpe, Jason, Nottinghamshire NG18 4XD (GB)
(72) Inventor: Thorpe, Jason, Nottinghamshire NG18 4XD (GB)
(74) Representative: Potter Clarkson

(57) **Abstract**

There is provided a securing fixture for attaching a device to a ceiling tile or a ceiling panel, the securing fixture comprising: a base for mounting on the ceiling tile or ceiling panel; a collar projecting from the base, the collar comprising at least one collar aperture for passage of an electrical cable, the at least one collar aperture extending through the collar and base.

## Description

### Field

The present disclosure relates to a securing fixture. In particular, the present disclosure relates to a securing fixture for attaching a device to a ceiling tile or a ceiling panel.

### Summary

According to a first aspect of the present disclosure, there is provided a securing fixture for attaching a device to a ceiling tile or a ceiling panel, the securing fixture comprising: a base for mounting on the ceiling tile or ceiling panel; a collar projecting from the base, the collar comprising at least one collar aperture for passage of an electrical cable, the at least one collar aperture extending through the collar and base.

The base may include at least one base aperture for passage of an electrical cable, the at least one base aperture extending through the base. The at least one base aperture may be offset from the collar.

The at least one base aperture may be blocked by a removable cover portion, the at least one base aperture forming a through-hole upon removal of the removable cover portion. The cover portion may be a thinned portion that is thinner than a thickness of the base. The cover portion may include at least one perforation.

The at least one base aperture may have a first equivalent diameter. The at least one collar aperture may have a second equivalent diameter which is different from the first equivalent diameter. The second equivalent diameter may be larger than the first equivalent diameter. The first equivalent diameter may be 6-10mm. The second equivalent diameter may be 20-22 mm.

The securing fixture may further comprise one or more fastening apertures for receiving one or more respective fasteners to anchor a device to the securing fixture. The one or more fastening apertures may be positioned proximal to the collar. The collar may further comprise one or more enclosed chambers. The one or more fastening apertures may be positioned within the one or more enclosed chambers so that, when a device is anchored to the securing fixture using one or more respective fasteners, the one or more respective fasteners are contained within the one or more enclosed chambers.

The base may comprise a non-slip surface for abutting the ceiling tile or ceiling panel. The non-slip surface may comprise an embossed pattern.

The collar may extend from a central position of the base.

The at least one base aperture may be 50-70mm away from a centreline of the collar.

The collar may comprise one or more angled walls surrounding the at least one collar aperture. The collar may be a conical frustrum. In other embodiments, the collar may comprise one or more straight walls surrounding the at least one collar aperture.

The base may have a first thickness, the base may further comprise one or more cutting sections, and the one or more cutting sections may have a second thickness. The second thickness may be smaller than the first thickness and/or the one or more cutting sections may comprise one or more breakaway tabs. The one or more cutting sections may define one or more respective concentric shapes which are coaxial with the collar. The one or more respective concentric shapes may comprise a square with a width of 73-80mm.

The collar may have an equivalent diameter of 50-65mm. The collar may have a height of 25-45mm, preferably 25-35mm.

The base may comprise two or more base apertures, for example only two base apertures. The collar may comprise two or more collar apertures, for example only two collar apertures.

The at least one base aperture may be at least one first base aperture, and the base may further comprise a plurality of second base apertures. The plurality of second base apertures may be arranged in a uniform or quasi-uniform distribution. Each second base aperture may be 1-5mm. Each second base aperture may be spaced apart from each other adjacent second base aperture by 5-10mm.

The securing fixture may be made of a fire-retardant material. Other materials, such as plastic, may be used for the securing fixture.

The base may comprise a base portion, wherein the base portion comprises a collar attachment region.

The collar may comprise a collar portion, wherein the collar portion comprises the at least one collar aperture for passage of an electrical cable, wherein the collar portion is removably attached to the collar attachment region of the base portion.

The collar attachment region of the base portion may comprise a threaded region.

The collar portion may comprise a corresponding threaded region, wherein the corresponding threaded region is configured to engage with the threaded region of the collar attachment region.

The collar portion may further comprise a base friction section which is configured to abut the base of the base portion.

The collar portion may comprise a body, the body comprising at least one channel extending therethrough for passage of one or more electrical cables, the at least one collar aperture connected to the or the respective channel.

The collar portion may further comprise one or more fastening apertures for receiving one or more respective fasteners to anchor a device to the securing fixture.

The fastening apertures of the collar portion may be the same or different to the fastening apertures of the securing fixture.

The collar portion may further comprise one or more enclosed chambers, wherein the one or more fastening apertures are positioned within the one or more enclosed chambers such that, when a device is anchored to the securing fixture using one or more respective fasteners, the one or more respective fasteners are contained within the one or more enclosed chambers.

According to a further aspect of the present disclosure, there is provided an assembly comprising: a securing fixture according to any one of the first aspect of the invention and its embodiments; a ceiling tile or ceiling panel; and a device anchored to the securing fixture through the ceiling tile or ceiling panel.

Preferably the device is a fire alarm device or a security device. The device may be one of: a fire alarm detector; a fire alarm void detector indicator; an intruder alarm 360 detector; a surveillance camera; a motion sensor; and a network hub.

The base may be substantially the same size as, or smaller than, the ceiling tile or ceiling panel.

According to a further aspect of the present disclosure, there is provided a method for using a securing fixture as described above for attaching a device to a ceiling tile or ceiling panel, the method comprising: making a hole in the ceiling tile or ceiling panel; positioning the securing fixture above the hole in the ceiling tile or ceiling panel so that the hole aligns with one or more of the at least one collar aperture; passing one or more electrical cables through the hole in the ceiling tile or ceiling panel and one or more of the at least one collar aperture; and fixing a device to the securing fixture through the ceiling tile or ceiling panel.

When the securing fixture comprises the at least one base aperture, the method may comprise: positioning the securing fixture above the hole in the ceiling tile or ceiling panel so that the hole aligns with one or more of the at least one base aperture and the at least one collar aperture; and passing one or more electrical cables through the hole in the ceiling tile or ceiling panel and one or more of the at least one base aperture and the at least one collar aperture.

Fixing the device to the securing fixture through the ceiling tile or ceiling panel may comprise applying one or more respective fasteners to anchor the device to the securing fixture.

It will be appreciated that the use of the terms "first" and "second", and the like, in this patent specification is merely intended to help distinguish between similar features, and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments will now be described by way of example only with reference to the accompanying drawings in which:
Figure 1 shows a bottom-up plan view of a securing fixture according to an embodiment of the present disclosure;
Figure 2 shows a top-down plan view of a securing fixture according to another embodiment of the present disclosure;
Figure 3 shows a cross-section view of the securing fixture of Figure 2;
Figure 4 shows a perspective view of the securing fixture of Figure 2;
Figures 5a-c show various perspectives of some assemblies which include a securing fixture, a ceiling tile and a device anchored to the securing fixture through the ceiling tile;

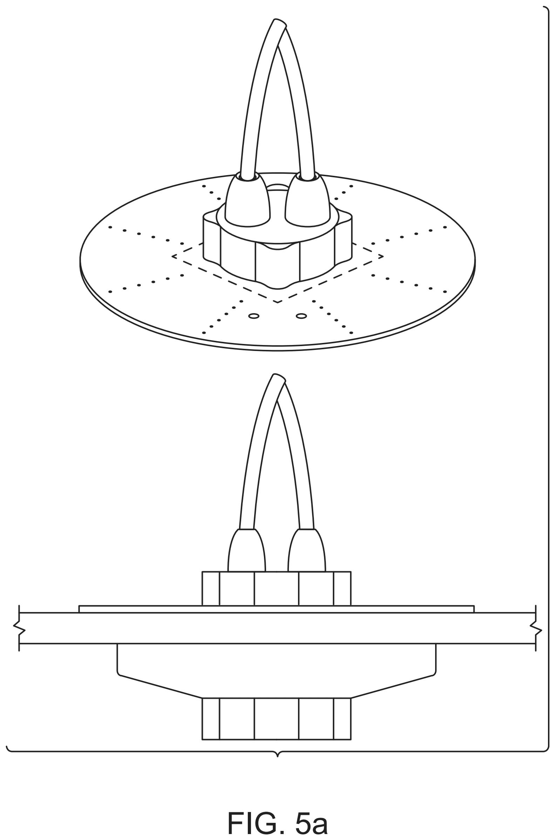

Figure 5a shows an assembly wherein the device is a fire alarm detector;

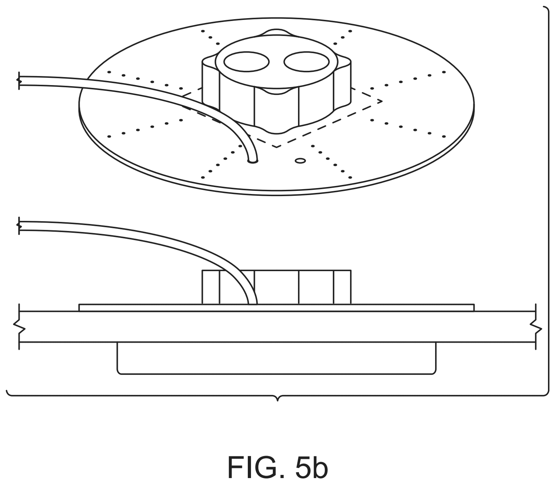

Figure 5b shows an assembly wherein the device is an intruder alarm 360 detector;

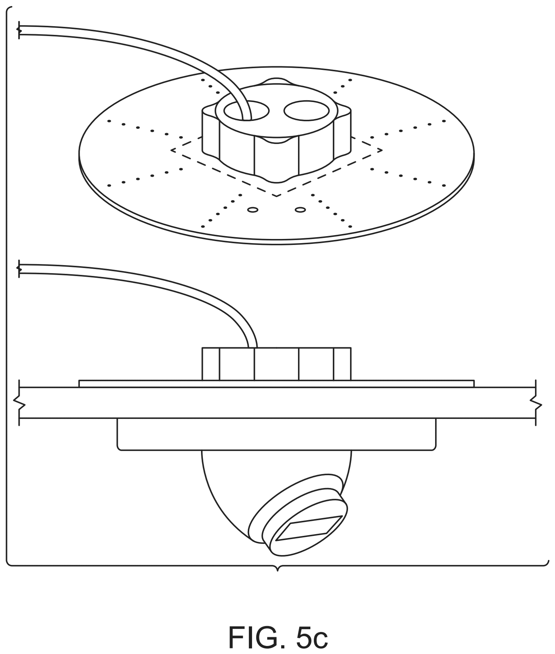

Figure 5c shows an assembly wherein the device is a surveillance camera;

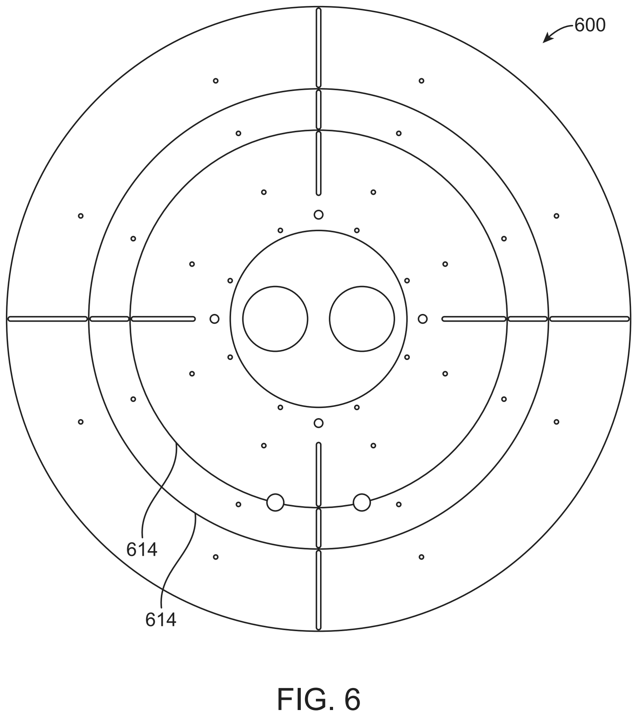

Figure 6 shows a plan view of a securing fixture according to a further embodiment of the present disclosure;

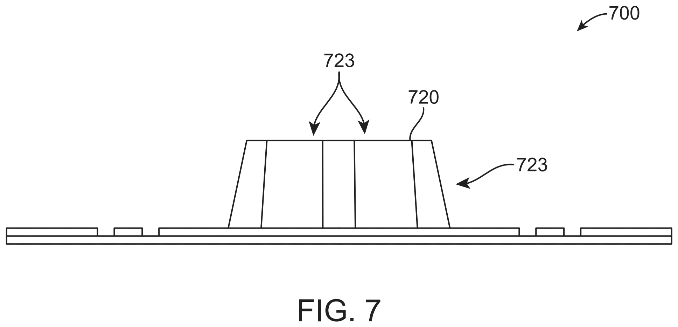

Figure 7 shows a cross-section view of the securing fixture of Figure 6, wherein the one or more cutting sections have a second thickness which is smaller than the first thickness;

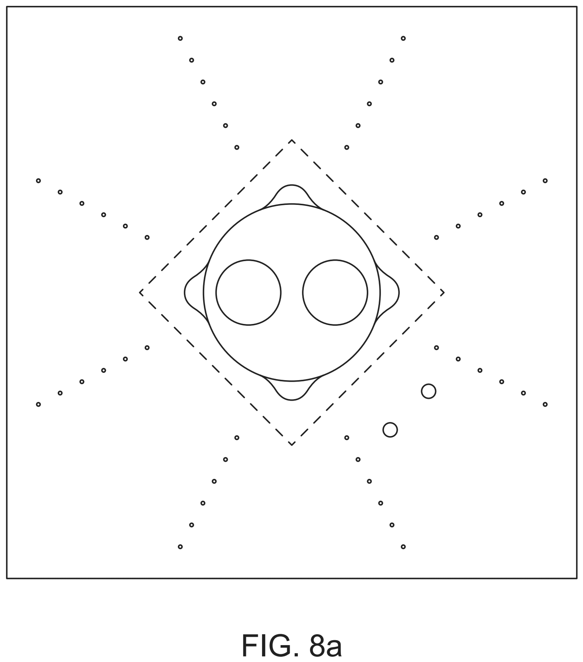

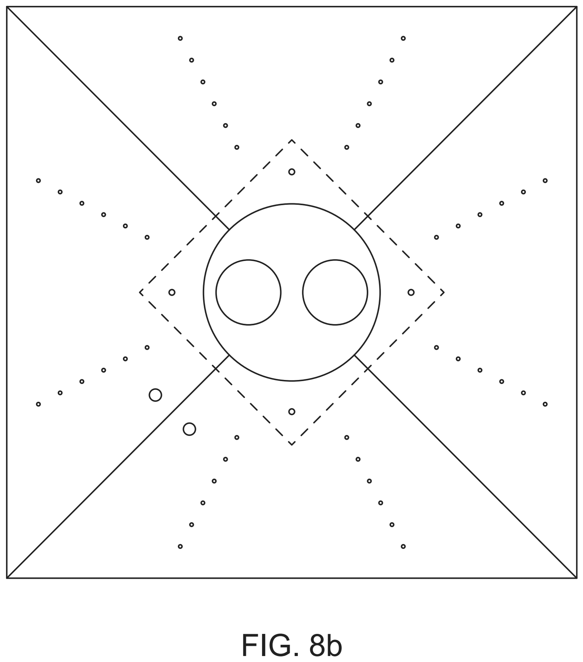

Figures 8a and 8b show various perspectives of a securing fixture according to an embodiment of the present disclosure;
Figure 8a shows a top-down plan view of the securing fixture;
Figure 8b shows a bottom-up plan view of the securing fixture;

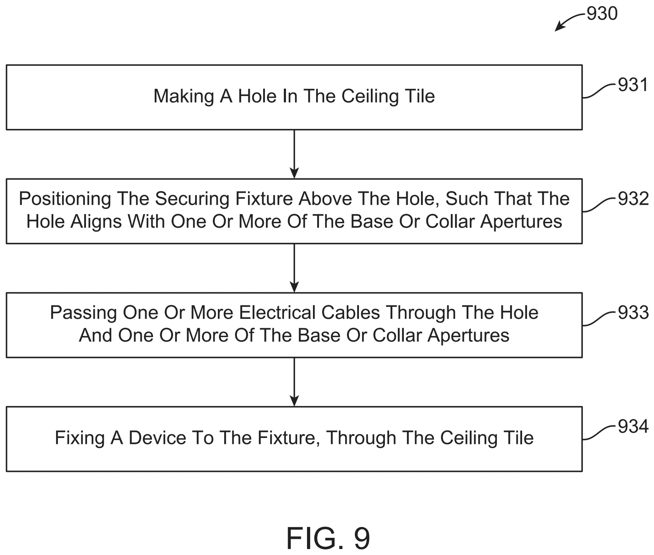

Figure 9 shows a method for using a securing fixture according to an embodiment of the present disclosure;

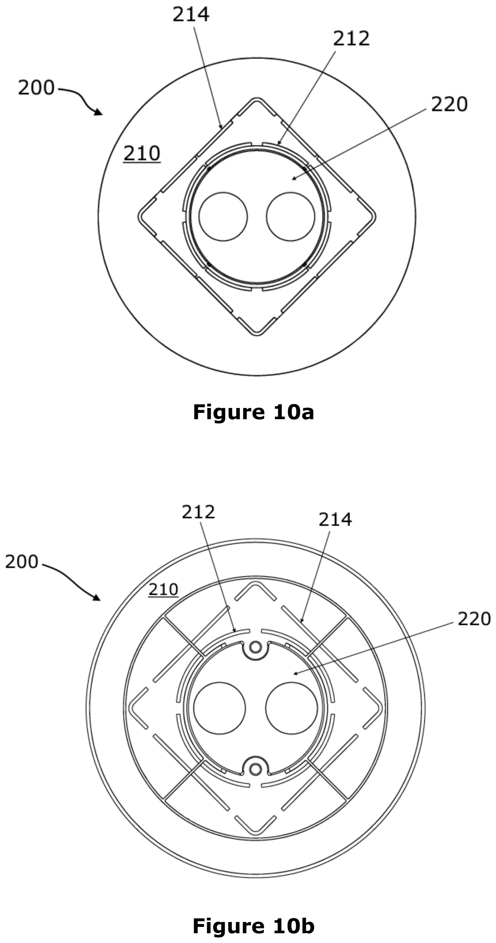

Figures 10a and 10b respectively show top-down and bottom-up plan views of a securing fixture according to a further embodiment of the present disclosure;

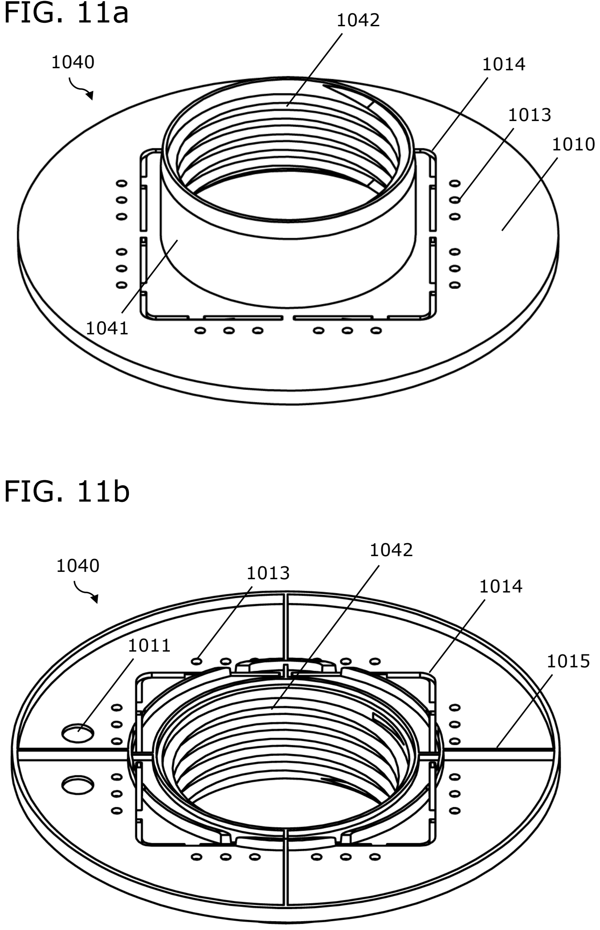

Figures 11a and 11b show a base portion of a securing fixture according to an embodiment of the present disclosure; and

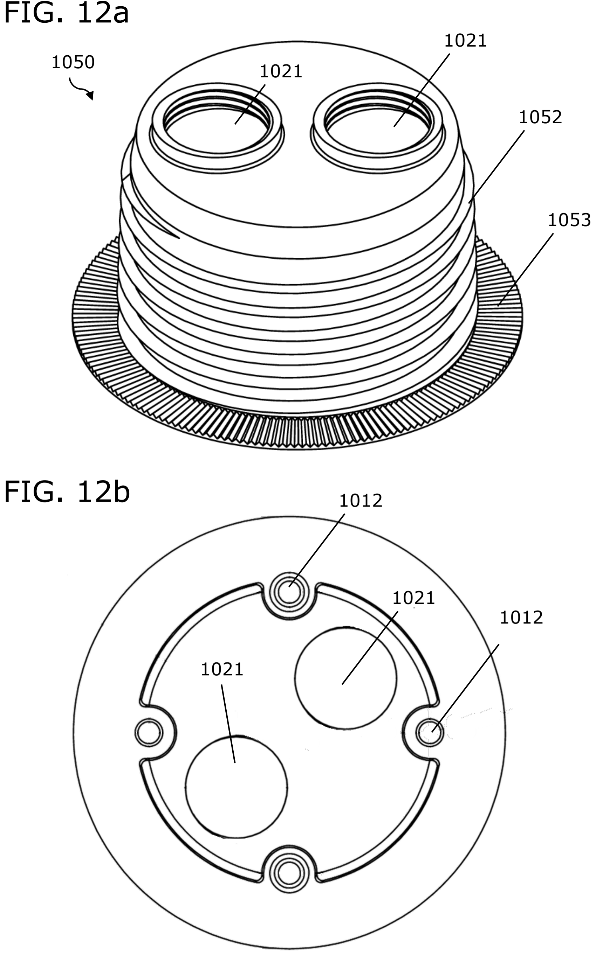

Figures 12a to 12d show a collar portion of a securing fixture according to an embodiment of the present disclosure.

### Detailed Description

In the modern day, many rooms (in, for example, offices, schools, hospitals and warehouses) have a false ceiling made up of a plurality of ceiling tiles or ceiling panels which are removably supported by a frame. False ceilings can provide many practical advantages to such a room which are well understood in the art.

A ceiling tile or panel (hereinafter simply referred to as a ceiling tile for the purpose of conciseness) provides an appropriate surface to which a variety of different devices may be affixed. For example, it may be desirable to attach a device such as a fire alarm detector, a fire alarm void detector indicator, an intruder alarm 360 detector, a surveillance camera, a motion sensor, and a network hub, to a ceiling tile in order to effectively position the device for the proper fulfilment of its required function.

The ceiling tiles often conform to a set of predetermined standard measurements in order to improve their replaceability, for example, and the various devices also often conform to one or more standard designs or cable arrangements.

Although there are many different types of devices, each type of device mentioned above typically adheres to a standardised layout and size for the purpose of compatibility with the wide range of implementations in which they may be required. Because each of these devices are intended for mounting on a ceiling, the standard sizes and weights of each type of device tend to be comparable to each other type of device listed. This means that each of the devices are often suitable for being affixed to the ceiling tile in a similar way and using similar materials. Indeed, in a given assignment, a single serviceperson is likely to be commissioned to install or repair a plurality of different types of devices.

However, there is no currently available universal fixture available in the art. Instead, the current procedure for attaching a device to a ceiling tile involves the serviceperson fashioning an improvised mounting structure for the device using one or more pieces of material available to them (such as wood, UPVC trunking, galvanised end boxes etc.) which were not designed for this purpose. This approach is sub-optimal for a number of reasons. Firstly, the piece(s) of material may not be appropriately suited to the task. For example, a device fixed to an improvised fixture may not be properly secured, or the improvised fixture may add unnecessary weight to the ceiling tile, thereby increasing strain on the tile. In some cases, an improvised fixture can present a safety risk. For example, a flammable material (such as wood) may be used to mount a fire alarm if this is all that was available to the serviceperson at the time of installation.

Therefore, a need arises in the art for providing a universal fixture for such devices. The present disclosure describes a securing fixture for attaching a device to a ceiling tile which solves the above-discussed problems.

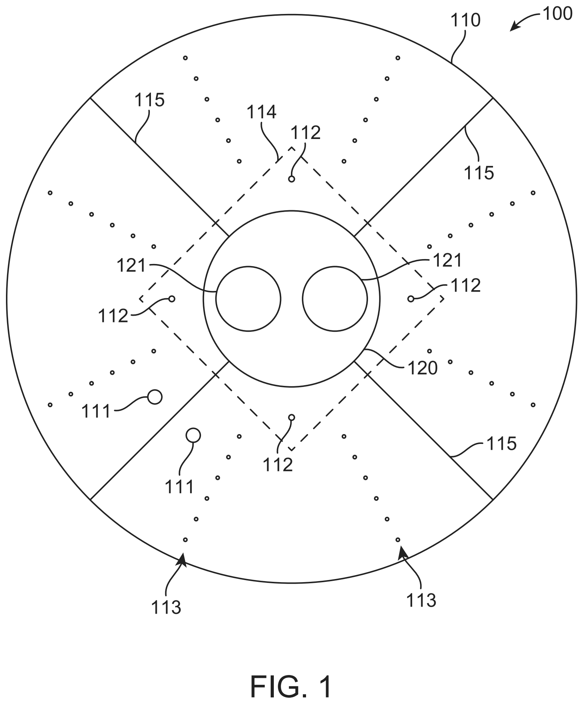

Figure 1 shows a bottom-up plan view of a securing fixture 100 according to an embodiment of the present disclosure. The securing fixture 100 includes a base 110 for mounting on the ceiling tile and a collar 120 projecting from the base 120. The collar 120 includes at least one collar aperture 121 for passage of an electrical cable, the at least one collar aperture 121 extending through the collar 120 and base 110.

The base 110 includes at least one base aperture 111 for passage of an electrical cable, the at least one base aperture 111 extending through the base 110, wherein the at least one base aperture 111 is offset from the collar 120. The at least one base aperture 111 may be 50-70mm away from the collar 120, for example. This exemplary spacing of the base apertures 111 from the collar 120 corresponds to the standard position of intruder alarm 360 detector cables when compared to the centre of the detector. In any case, by providing the one or more base apertures 111 offset from the collar 120, the securing fixture 100 can allow passage to a plurality of electrical cables which originate from different positions on the device. This ensures that the securing fixture is compatible with a wide range of devices.

In this embodiment, the base 110 includes two base apertures 111 and the collar 120 includes two collar apertures 121. This is because a standard fire alarm detector uses two fire alarm cables (and therefore the collar 120 includes a collar aperture 121 corresponding to each of the two fire alarm cables), and a standard intruder alarm 360 detector uses two intruder alarm cables (and therefore the base 110 includes a base aperture 111 corresponding to each of the two intruder alarm cables).

It is beneficial to provide one aperture per electrical cable as this can help to provide support for the cable and prevent the cables from becoming tangled. Furthermore, using the correct number of apertures can provide an increased level of protection for the device. For example, a securing fixture 100 with two collar apertures 121 becomes sealed from dust when two fire alarm cable glands are fitted. It will be understood however, that in some embodiments this may not be the case. The collar 120 may include one, larger, collar aperture 121 which is suitable for passage of both fire alarm cables, for example, and the same is true for the base aperture(s) 111. In some embodiments, the securing fixture 100 may include more than two base apertures 111 and / or more than two collar apertures 121.

The base and collar apertures 111, 121 may be any suitable shape, such that one or more electrical cables may pass through. The base and collar apertures 111, 121 may be the same shape as each other, or they may be different shapes. In this example, the base and collar apertures 111, 121 are circular.

In addition, the at least one base aperture 111 may have a first equivalent diameter, and the at least one collar aperture 121 has a second equivalent diameter which is different from the first equivalent diameter. The term "equivalent diameter", as used herein, refers to the area of a circle which has an equal area to a shape which is not necessarily circular. Therefore, if the apertures are circular, then the diameters of the base and collar apertures 111, 121 may be different. If the apertures are rectangular, then the lengths and widths of the base and collar apertures 111, 121 may be different, and so on. In any case, the areas of the base and collar apertures 111, 121 may be different from each other. Therefore, the base and collar apertures 111, 121 may be suitable for allowing passage of different types of electrical cables.

In this example, the second equivalent diameter is larger than the first equivalent diameter. For example, the first equivalent diameter may be 5-10mm and the second diameter may be 20 mm. In this way, the first equivalent diameter may be suitable for a standard intruder alarm cable and the second equivalent diameter may be suitable for a standard fire alarm cable and glands.

The collar 120 may have an equivalent diameter of 50-65mm and a height of 25-45mm, for example. In this way, the collar 120 can accommodate the one or more collar apertures 121 and allow space for routing of the cable cores between the top surface of the collar 120 (that is, the surface of the collar 120 which is opposite the ceiling tile) and the device. The thickness of the collar walls and roof (that is, the surface opposite the ceiling tile) may be 1mm, or 3mm, for example. In this way, the collar walls and roof may be optimised for weight or fire resistance, depending on the application. It will be understood that the collar walls and roof may be any other suitable thickness.

The securing fixture 100 may include one or more fastening apertures 112 for receiving one or more respective fasteners to anchor a device to the securing fixture 100. The one or more fastening apertures 112 may be positioned proximal to the collar 120. That is, the one or more fastening apertures may be located within 2-5mm of the collar 120, for example. The securing fixture 100 may include four fastening apertures, each with a 3mm equivalent diameter, positioned such that the four fastening apertures 112 define a square around the collar 120 with a width of approximately 47mm, for example (such that two opposite fastening apertures 112 are spaced 66mm apart). In this way, the device can be anchored to the securing fixture 100 such that a centre point of the device is positioned substantially underneath the collar 120 in two different orientations, which improves the compatibility of the securing fixture 100 with different devices. In some embodiments, the securing fixture 100 may include two fastening apertures 112. In some embodiments wherein the securing fixture 100 includes two collar apertures 121, the two collar apertures 121 may define an axis which passes through a centre point of each collar apertures, wherein a centre point of one or more of the fastening apertures 112 is also positioned on the axis.

In some examples, the collar 120 extends from a central position of the base 110. This arrangement of the fastening apertures 112, base and collar apertures 111, 121 and the collar 120 is suitable for securely fixing most or all types of standardised devices to the securing fixture 100 such that one or more apertures 111, 121 provide passage for each of the necessary electrical cables of the respective device.

In some embodiments, the at least one base aperture 111 are first base apertures 111, and the base also includes a plurality of second base apertures 113. The plurality of second base apertures 113 may have the function of secondary guide holes for fasteners, when the fastening apertures 112 are not appropriately positioned for a particular device. In some examples, the second base apertures 113 may have an equivalent diameter of 1-5mm, or more specifically 2mm, for example. The plurality of second base apertures 113 may be arranged in a uniform or quasi-uniform distribution. For example, the second base apertures 113 may be spaced apart from each other adjacent second base aperture 113 by 5-10mm, and the second base apertures 113 may be arranged in a series of lines which radially extend from the collar 120, as shown in Figure 1. This provides an improved flexibility of the securing fixture 100, such that more types of devices can be mounted to the securing fixture 100.

In some embodiments, the base 110 may be comprised of a material with appropriate properties and dimensions such that a fastener such that a serviceperson may puncture the base 110 with a drill or a fastener (such as a screw) with relative ease.

In some embodiments, the base 110 is flat, or substantially flat, such that the contact between the base 110 and the ceiling tile is maximised.

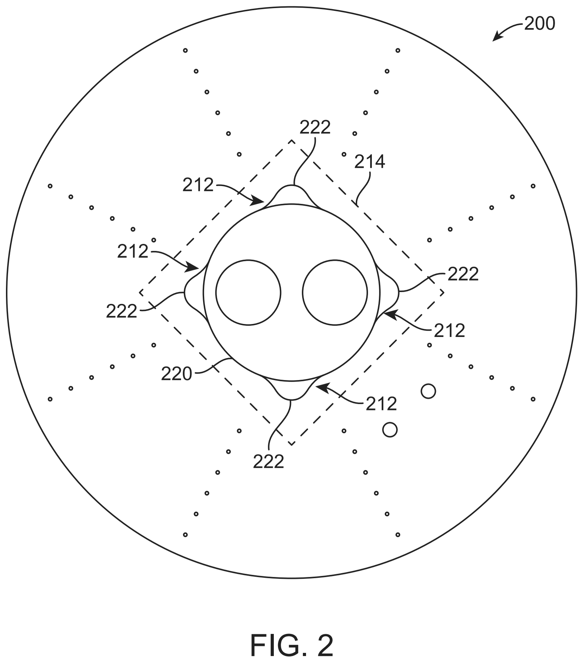

Figure 2 shows a top-down plan view of a securing fixture 200 according to an embodiment of the present disclosure. In this embodiment, the collar 120 also includes one or more enclosed chambers 222, wherein the one or more fastening apertures 212 are positioned within the one or more enclosed chambers 222. In this way, when a device is anchored to the securing fixture 200 using one or more respective fasteners, the one or more respective fasteners are contained within the one or more enclosed chambers 222.

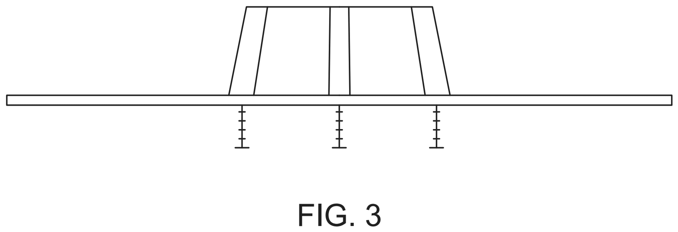

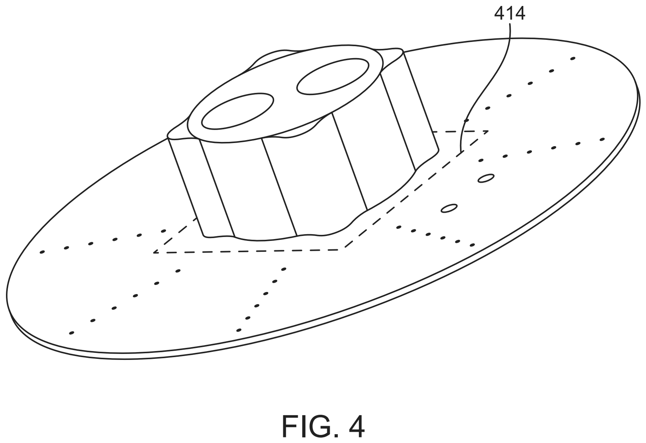

Figure 3 shows a cross-section view of the securing fixture of Figure 2. Figure 4 shows a perspective view of the securing fixture of Figure 2. Figures 5a-c show various perspectives of some assemblies which include a securing fixture, a ceiling tile and a device anchored to the securing fixture through the ceiling tile. Figure 5a shows an assembly wherein the device is a fire alarm detector; Figure 5b shows an assembly wherein the device is an intruder alarm 360 detector; and Figure 5c shows an assembly wherein the device is a surveillance camera.

Figure 6 shows a bottom-up plan view of a securing fixture 600 according to a further embodiment of the present disclosure. In this embodiment, the base 610 has a first thickness, and further includes one or more cutting sections 614. The one or more cutting sections 614 may have a second thickness which is smaller than the first thickness and / or the one or more cutting sections 614 may comprise one or more breakaway tabs. In this way, the one or more cutting sections 614 define regions in which the securing fixture 600 may be easily cut by a serviceperson (for example using scissors, snips or cutting pliers). This allows the securing fixture 600 to be easily adjusted in order to become sized appropriately for the application.

In this embodiment, the one or more cutting sections 614 define one or more respective concentric shapes which are coaxial with the collar. The one or more concentric shapes may be any suitable shape. For example, in the embodiment shown in Figure 6, the one or more concentric shapes are circular, and in the embodiments shown in Figures 1, 2 and 4, the one or more concentric shapes may be square (wherein the cutting section is denoted by reference numerals 114, 214 and 414 respectively). In the embodiments shown in Figures 1, 2 and 4, the cutting section 114, 214, 414 has a width of 73-80mm, for example.

In the embodiments shown in Figures 1, 2 and 4, the cutting section 114, 214, 414 enables the collar 120 to be removed leaving a square aperture in the base 110. This square aperture may be suitable for mounting other types of attachment, such as a dry lining mounting box which can be used to house a void detection face plate, for example. In these embodiments, the cutting section 114, 214, 414 may be positioned such that one or more corners of the cutting section 114, 214, 414 are aligned with one or more of the enclosed chambers 222. In this way, space may be more efficiently utilised.

Figure 7 shows a cross-section view of the securing fixture of Figure 6, wherein the one or more cutting sections have a second thickness which is smaller than the first thickness. The first thickness may be 1.5mm and the second thickness may be 1mm, for example. In other examples, the first thickness may be 3mm and the second thickness may be 1.5mm, in order to maintain the fire resistance of the securing fixture. As above, it will be understood that the first and second thicknesses may be any other suitable thicknesses.

In this embodiment, the collar 720 includes one or more angled walls 723 surrounding the at least one collar aperture 721. In this way, the securing fixture 700 may be stackable with other similar securing fixtures 700, which improves the practicality of the securing fixture for storage between assignments of a serviceperson. In this embodiment, the collar 720 is a conical frustrum, but it will be understood that other shapes are available. In embodiments where the collar 720 includes one or more enclosed chambers (not shown), the enclosed chambers may also include one or more angular walls in order to fulfil the same function.

The securing fixture 700 may be substantially the same size as, or smaller than the ceiling tile. For example, the securing fixture 700 may have a width and / or height of 150-200mm or 550-600mm. A larger securing fixture 700 ensures that the weight force inflicted on the ceiling tile by the securing fixture 700 is more evenly distributed across the ceiling tile, and a smaller securing fixture 700 is easier to store and has a lower overall weight than a larger securing fixture. In this embodiment, the securing fixture is 185mm wide and 185mm tall, but these figures are merely exemplary. The securing fixture 700 may be any suitable shape. For example, the securing fixture 700 may be circular (as shown in Figures 1-7), or the securing fixture 700 may be square (as shown in Figure 8). In examples where the securing fixture 700 is substantially the same size as the ceiling tile, it may be beneficial to use a square securing fixture (such as the securing fixture shown in Figures 8a and 8b) such that a contact area between the securing fixture and the ceiling tile is maximised, thereby heightening the weight distribution advantages provided by a larger securing fixture.

We return now to Figure 1. The base 110 may include a non-slip surface for abutting the ceiling tile. The non-slip surface advantageously helps the securing fixture 100 to provide a secure connection with the device by reducing the chance of the securing fixture 100 slipping on the ceiling tile.

The non-slip surface may be implemented in any suitable way and may be applied to all embodiments of the invention. For example, the lower surface of the base 110 (that is, the surface of the base 110 which abuts the ceiling tile) may have a rough texture, may be made of a material with a high coefficient of friction (such as rubber), or may comprise an embossed pattern.

In this embodiment, the non-slip surface includes a plurality of supports 115, wherein the plurality of supports 115 have a third thickness which is greater than the first thickness (thereby forming an embossed pattern on the lower surface of the base). In this embodiment, the third thickness is 3mm, but it will be understood that any other suitable thickness may be used. In this way, the advantages of a non-slip base are achieved along with the additional advantage of an increased strength and stability of the securing fixture 100 provided by the supports.

In some embodiments, the securing fixture 100 is made of a waterproof and / or fire-retardant material, such as Acrylonitrile Butadiene Styrene flammability UL94 1.5mm V-0 (ABSFR). This improves the safety of the securing fixture 100, especially in assemblies wherein the device is a fire alarm detector, for example. In examples, where fire resistance is not required, the securing fixture 100 may be made of Acrylonitrile Butadiene Styrene (ABS), for example. It will be appreciated that the above materials are provided for understanding only, and any other suitable material may be used.

Figure 9 shows a method 900 for using a securing fixture according to an embodiment of the present disclosure. The method 900 includes making, at step 931, a hole in the ceiling tile, and positioning, at step 932, the securing fixture above the hole in the ceiling tile, such that the hole aligns with one or more of the at least one base aperture and the at least one collar aperture. Next, the method 900 includes passing, at step 933, one or more electrical cables through the hole in the ceiling tile and one or more of the at least one base aperture and the at least one collar aperture, and fixing, at step 934, a device to the fixture, through the ceiling tile.

In some embodiments, fixing the device to the fixture through the ceiling tile, at step 934, includes applying one or more respective fasteners to anchor the device to the securing fixture. The one or more respective fasteners may be screws, for example.

In further embodiments, the at least one base aperture may be blocked by a removable cover portion. When the removable cover portion is removed (e.g. by tearing or puncturing), the at least one base aperture forms a through-hole. The cover portion may be a thinned portion that is thinner than a thickness of the base, or a weakened portion. Additionally or alternatively the cover portion may include at least one perforation to aid removal of the cover portion.

In still further embodiments, the at least one base aperture may be optional. In other words, the at least one base aperture may be omitted from the securing fixture. Figures 10a and 10b show a securing fixture in which the at least one base aperture is omitted.

Figures 10a and 10b also show the provision of removable portions comprised in the base. A plurality of first removable portions is in the form of a series of curved portions surrounding an outer circumference of the collar. Each curved portion is spaced apart from their neighbouring curved portions. A plurality of second removable portions is in the form of a series of straight lines and bends that is arranged in a square outline surrounding the plurality of first removable portions and the collar. Each second removable portion is spaced apart from their neighbouring second removable portions. Each removable portion may be in the form of a thinned portion (which is thinner than a thickness of the rest of the base) or a weakened portion that can be easily removed. The removal may be performed by puncturing, tearing or cutting. The removable portions enable the fitting or attachment of components or housings (such as dry lining boxes) to the securing fixture. If the fitting or attachment of components or housings is not required, then the removable portions may be left intact. Either the first removable portions or the second removable portions may be excluded. The first and/or removable portions are applicable to other embodiments described throughout this specification.

In some embodiments, the base can include a base portion, and the collar can include a collar portion. In these embodiments, the base portion comprises a collar attachment region, wherein the collar portion is removably attached to the collar attachment region of the base portion. This can improve the flexibility of the securing fixture, as discussed below.

Figures 11a and 11b show an example base portion 1040 of a securing fixture according to an embodiment of the present disclosure, wherein Figure 11a shows a top side view and Figure 11b shows a bottom side view. Along with other features described above (such as a cutting section 1014, first base apertures 1011 and second base apertures 1013 and supports 1015), the base portion 1040 further includes a collar attachment region 1041 for attaching a collar portion (such as the collar portion shown in Figures 12a to 12d).

In this embodiment, the collar attachment region 1041 comprises a threaded region 1042 which is configured to engage with a corresponding threaded region of the collar portion. The collar attachment region 1041 of the base portion 1040 of Figures 11a and 11b has a height (relative to the base 1010) which is substantially equal to the height of the corresponding collar portion. In this way, the threaded region 1042 can be provided across substantially the entire height of the collar portion, thereby maximising the contact area which can provide a strong degree of connection between the two portions. It will be appreciated that the respective threaded regions may extend partway through the respective heights of the collar attachment region 1041 and the collar portion,

In this embodiment, the threaded region 1042 is provided on an inside surface of the collar attachment region 1041, and correspondingly the respective threaded region is provided on an outside surface of the collar portion (see Figures 12a to 12d). However, but in other embodiments the threaded region 1042 may be provided on an outside surface of the collar attachment region 1041, and an inside surface of the collar portion.

It will be understood that in some alternative embodiments, the collar attachment region 1041 may have any height relative to the base 1010, and the threaded portion 1042 may have a height which is smaller than the height of the collar attachment region 1041. Furthermore, in some other alternative embodiments, the collar attachment region 1041 may provide for any other suitable means of attachment between the base portion 1040 and the collar portion. This can include friction-based attachments such as a push fit connector and a snap fit connector, adhesive-based connections and attachments which use fasteners such as screws, nuts and bolts.

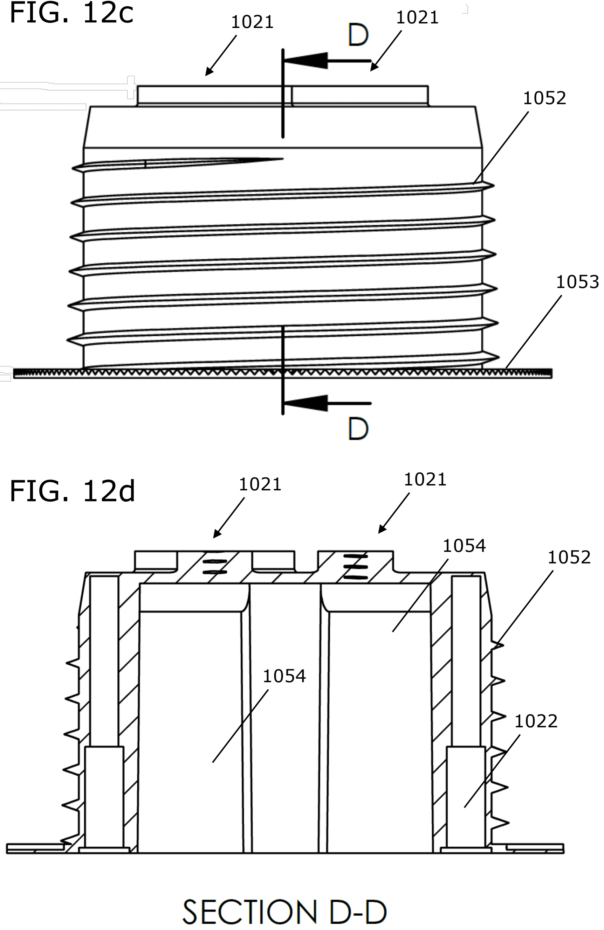

Figures 12a to 12d show an example collar portion 1050, for connecting to the base portion of Figures 11a and 11b. Specifically, Figure 12a shows a top side view of the collar portion 1050, Figure 12b shows a bottom view of the collar portion 1050, Figure 12c shows a side view of the collar portion 1050 and Figure 12d shows a side cross sectional view of the collar portion 1050.

As is apparent from the figures, the collar portion 1050 includes a threaded portion 1052 configured to engage with the threaded portion of the base portion (see Figures 11a and 11b).

In this embodiment, the collar portion 1050 includes two collar apertures 1021, which are suitable for the passage of two fire alarm cables, whilst providing a barrier for dust as discussed above. However, a dust-proof casing may not be required for all types of devices, such as intruder alarms, for example. Therefore, a complete enclosure broken only by two apertures may not be required for all types of devices. Therefore, it can be beneficial to provide a removable collar portion 1050 which includes two fire-alarm-cable-suitable collar apertures 1021. It will also be understood therefore, that collar portions 1050 which include different types and/or numbers of collar apertures may be provided, such that the securing fixture can be optimised for any particular circumstance. For the purposes of brevity, these alternative collar portions will not be described herein.

Each collar aperture 1021 may include an internal screw thread to, for example, enable fastening of a threaded fire alarm gland. In other embodiments, each collar aperture 1021 may be unthreaded.

In this embodiment, the collar portion 1050 includes a base friction section 1053 for providing additional friction with the base portion, when the two are connected. The base friction section 1053 in this example comprises a rough surface which is configured to abut the base of the base portion when the collar portion 1050 is connected to the base portion. However, it will be understood that the base friction section 1053 may comprise any other suitable high-friction surface, such as rubber. In this way, the friction between the base portion and the collar portion 1050 is increased, thereby reducing the likelihood of the collar portion 1050 slipping. In some embodiments, the base portion may comprise a corresponding collar friction section (not shown) to further increase the friction.

As is apparent from Figures 12b and 12d, the collar portion may include the fastening apertures 1012 and enclosed chambers 1022 which have been described above. The enclosed chambers 1022 and fastening apertures 1012 may provide particular advantage to fire alarm devices, due to the standard positioning of fire alarm fixtures. The particular arrangement of fastening apertures 1012 can be adapted within any given collar portion 1050, in order to properly align with any device requirements. One or more inserts may be provided in one or more of the fastening apertures 1012 to permit use of differently sized fasteners, e.g. screws of a different diameter.

As is apparent from Figure 12b, the collar apertures 1021 may be provided at an angle compared to the fastening apertures 1012. This is in order to provide optimal spacing within the collar portion 1050.

As shown in Figure 12d, the collar portion 1050 may include a body which includes one or more channels 1054 extending therethrough for passage of electrical cables, wherein the one or more channels are connected to the at least one collar aperture. The body may be solid, apart from the channels. These channels 1054 provide an increased level of support for the electrical cables which are passed through them, thereby increasing the longevity of said cables. The collar portion 1050 can include one or more channels 1054, such that a corresponding number of channels 1054 and collar apertures 1021 are provided.

The device (e.g. a fire alarm device) may therefore be attached to the collar portion 1050 without having to be directly attached to the base portion 1040.

As described above, any or all apertures of the collar portion 1050 or the base portion may be punch-through apertures which include a thin or weakened layer of material which initially closes the aperture. In particular, each collar aperture 1021 may be provided with a removable blocking portion that blocks passage through the collar aperture 1021. The blocking portion may be designed to have one or more weakened structures or may be manufactured to have a sufficiently small thickness to enable the blocking portion to be easily pushed out when a fire alarm cable is passed through the collar aperture 1021 or when a fire alarm gland is screwed into the collar aperture 1021. The blocking portions may provide protection from dust prior to being pushed out.

The listing or discussion of an apparently prior-published document or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. A securing fixture for attaching a device to a ceiling tile or a ceiling panel, the securing fixture comprising:
a base for mounting on the ceiling tile or ceiling panel;
a collar projecting from the base, the collar comprising at least one collar aperture for passage of an electrical cable, the at least one collar aperture extending through the collar and base.

2. A securing fixture of claim 1, wherein the base includes at least one base aperture for passage of an electrical cable, the at least one base aperture extending through the base, wherein the at least one base aperture is offset from the collar.

3. A securing fixture of claim 2, wherein the at least one base aperture is blocked by a removable cover portion, the at least one base aperture forming a through-hole upon removal of the removable cover portion, wherein the cover portion is optionally a thinned portion that is thinner than a thickness of the base, and wherein the cover portion optionally includes at least one perforation.

4. The securing fixture of any one of claims 2 or 3, wherein the at least one base aperture has a first equivalent diameter, and the at least one collar aperture has a second equivalent diameter which is different from the first equivalent diameter, and wherein the second equivalent diameter is optionally larger than the first equivalent diameter.

5. The securing fixture of any preceding claim, wherein the base comprises a non-slip surface for abutting the ceiling tile or ceiling panel, wherein the non-slip surface optionally comprises an embossed pattern.

6. The securing fixture of any preceding claim, wherein the collar extends from a central position of the base.

7. The securing fixture of any preceding claim, wherein:
the base has a first thickness,
the base further comprises one or more cutting sections, and
the one or more cutting sections have a second thickness which is smaller than the first thickness and/or the one or more cutting sections comprise one or more breakaway tabs,
the one or more cutting sections optionally define one or more respective concentric shapes which are coaxial with the collar, and
the one or more respective concentric shapes optionally comprises a square with a width of 73-80mm.

8. The securing fixture of any preceding claim, wherein:
the base comprises a base portion, wherein the base portion comprises a collar attachment region; and
the collar comprises a collar portion, wherein the collar portion comprises the at least one collar aperture for passage of an electrical cable, wherein the collar portion is removably attached to the collar attachment region of the base portion.

9. The securing fixture of claim 8, wherein:
the collar attachment region of the base portion comprises a threaded region; and
the collar portion comprises a corresponding threaded region, wherein the corresponding threaded region is configured to engage with the threaded region of the collar attachment region.

10. The securing fixture of claim 8 or 9, wherein the collar portion further comprises a base friction section which is configured to abut the base of the base portion.

11. The securing fixture of any of claims 8 to 10, wherein the collar portion comprises a body, the body comprising at least one channel extending therethrough for passage of one or more electrical cables, the at least one collar aperture connected to the or the respective channel.

12. The securing fixture of any of claims 8 to 11, wherein:
the collar portion further comprises one or more fastening apertures for receiving one or more respective fasteners to anchor a device to the securing fixture; and
the collar portion further comprises one or more enclosed chambers, wherein the one or more fastening apertures are positioned within the one or more enclosed chambers such that, when a device is anchored to the securing fixture using one or more respective fasteners, the one or more respective fasteners are contained within the one or more enclosed chambers.

13. An assembly comprising:
a securing fixture according to any preceding claim;
a ceiling tile or ceiling panel; and
a device anchored to the securing fixture through the ceiling tile or ceiling panel;
wherein the base is optionally substantially the same size as, or smaller than the ceiling tile or ceiling panel.

14. The assembly of claim 13, wherein the device is one of:
a fire alarm detector;
a fire alarm void detector indicator;
an intruder alarm 360 detector;
a surveillance camera;
a motion sensor; and
a network hub.

15. A method for using a securing fixture according to any of claims 1 to 14 for attaching a device to a ceiling tile or ceiling panel, the method comprising:
making a hole in the ceiling tile or ceiling panel;
positioning the securing fixture above the hole in the ceiling tile or ceiling panel so that the hole aligns with one or more of the at least one collar aperture;
passing one or more electrical cables through the hole in the ceiling tile or ceiling panel and one or more of the at least one collar aperture; and
fixing a device to the securing fixture through the ceiling tile or ceiling panel, wherein fixing the device to the securing fixture through the ceiling tile or ceiling panel optionally comprises applying one or more respective fasteners to anchor the device to the securing fixture.
